# EUROPÄISCHE PATENTSCHRIFT

(11) **EP 1 238 244 B1**
(45) Veröffentlichungstag und Bekanntmachung des Hinweises auf die Patenterteilung: **28.09.2005**
(21) Anmeldenummer: 00977474.6
(22) Anmeldetag: 03.11.2000
(51) Int. Cl.: G01B 11/30

(54) **KONTRASTAUTOFOKUS MIT DREI OPTISCHEN WEGEN**
AUTOMATIC CONTRAST FOCUSSING WITH THREE OPTICAL PATHS
MISE AU POINT AUTOMATIQUE PAR OPTIMISATION DES CONTRASTES A TROIS VOIES OPTIQUES

(30) Priorität: 03.11.1999 DE 19952833; 25.11.1999 DE 19956761
(43) Veröffentlichungstag der Anmeldung: 11.09.2002
(73) Patentinhaber: Werth Messtechnik GmbH, 35394 Giessen (DE)
(72) Erfinder: CHRISTOPH, Ralf, 35641 Schöffengrund (DE); LOTZE, Christian, 35463 Fernwald (DE)
(74) Vertreter: Stoffregen, Hans-Herbert
(86) Internationale Anmeldenummer: PCT/EP2000/010842
(87) Internationale Veröffentlichungsnummer: WO 2001/033166

(56) Entgegenhaltungen:
- EP-A- 0 939 294
- WO-A-99/53271

## Beschreibung

Die Erfindung bezieht sich auf ein Verfahren zur Bestimmung des Abstandes eines Punktes eines Objektes zu einem vorgegebenen Bezugspunkt wie Sensor mittels durch Messung von Kontrastwerten des in der Arbeitsebene des Sensors abgebildeten Punktes, insbesondere zur scannenden Profilbestimmung einer Materialoberfläche mit einem Koordinatenmessgerät, wobei eine in einem relativ zur Objektoberfläche beweglichen Tastkopf angeordnete den Sensor umfassende Optik zu dem Objekt eingestellt und aus der Position der Optik gegenüber dem Objekt der Abstand bzw. dessen Profil bestimmt wird, wobei im Abbildungsstrahlengang der Optik an den Enden mehrerer unterschiedlich langer optischer Wege jeweils die Kontrastwerte des abgebildeten Punktes gemessen werden. Ferner bezieht sich die Erfindung auf eine Vorrichtung zur Bestimmung des Abstandes eines Punktes eines Objektes zu einem vorgegebenen Bezugspunkt wie Sensor mittels durch Messung von Kontrastwerten des in der Arbeitsebene des Sensors abgebildeten Punktes, insbesondere zur scannenden Profilbestimmung einer Materialoberfläche mit einem Koordinatenmessgerät, wobei eine in einem relativ zur Objektoberfläche beweglichen Tastkopf angeordnete den Sensor umfassende Optik zu dem Objekt eingestellt und aus der Position der Optik gegenüber dem Objekt der Abstand bzw. dessen Profil bestimmbar ist, wobei im Abbildungsstrahlengang der Optik an den Enden mehrerer unterschiedlich langer optischer Wege jeweils die Kontrastwerte des abgebildeten Punktes messbar sind,

Zur Oberflächenanalyse von Materialoberflächen werden optisch abtastende Messsysteme eingesetzt, die nach dem Autofokusprinzip arbeiten. Es werden beispielsweise einzelne Autofokuspunkte nach dem Kontrastverfahren bei der Abtastung gemessen. Um vollständige Konturen aufzunehmen, benötigt dieses Verfahren lange Messzeiten. Pro Messpunkt sind einige Sekunden erforderlich.

Aus P. Profos, T. Pfeifer (Hrsg.): Handbuch der industriellen Messtechnik, 5. Aufl., Oldenbourg Verlag, München-Wien 1992, S. 455, 456 ist ein Verfahren der eingangs genannten Art bekannt. Dabei werden Laserabstandssensoren für die Erfassung von Oberflächen-Topographien verwendet. Bei dem bekannten Verfahren wird Licht einer Laserdiode über einen Kollimator und ein bewegliches Objektiv auf die Materialoberfläche geworfen. Das von der Oberfläche reflektierte Licht gelangt über die Objektivlinse, den Kollimator und einem Strahlteiler zu einem optoelektronischen Fokusdetektor in Form einer Modemzeile. Die Objektivlinse wird oberflächentopographieabhängig nachgeführt. Aus ihrer Bewegung wird das Höhenprofil ermittelt. Ein Nachteil dieses Verfahrens besteht in der starken Empfindlichkeit gegenüber Eigenschaftsänderungen der Materialoberfläche.

Aus H. Naumann, G. Schröder: Bauelemente der Optik, Taschenbuch der technischen Optik, 6. Aufl., C. Hanser Verlag, München-Wien 1992, S. 348, 349, ist eine Autofokussierung durch Kontrastmessung bekannt, wobei drei unterschiedlich lange optische Wege zur photometrischen Kontrastmessung benutzt und eine Scharfstellposition an einem Kontrastunterschied erkannt wird.

Aus der DE-Z: VDI-Z 131 (1989) Nr. 11, S. 12 - 16 R.-J. Ahlers, W. Rauh: "Koordinatenmesstechnik mit Bildverarbeitung" ist eine Koordinatenmessung nach dem Autofokusprinzip bekannt, bei der durch Kontrastanalyse mit Ortsfrequenzmessung der von einem bilderfassenden Sensor geliefenen Daten eine dreidimensionale Objektvermessung erfolgen kann.

In der WO 99/53271 wird ein Verfahren zur punktweise scannenden Profilbestimmung einer Materialoberfläche mit einem Koordinatenmessgerät nach dem Autofokusprinzip beschrieben, wobei eine in einem relativ zur Materialoberfläche beweglichen Tastkopf angeordnete Optik automatisch in ihrem Abstand zur Materialoberfläche eingestellt und aus der Position der Optik gegenüber der Materialoberfläche das Profil der Materialoberfläche dadurch bestimmt wird, dass im Abbildungsstrahlengang der Optik an den Enden zweier unterschiedlich langer optischer Wege jeweils der photometrische Kontrast gemessen wird und dass die Abstandeinstellung der Optik so erfolgt, dass die gemessenen Kontrastwerte gleich oder nahezu gleich sind. Wird der Tastkopf gegen die Materialoberfläche oder von dieser weg bewegt, ändert sich die Lage der von der Optik abgebildeten Ebene gegenüber den Enden der beiden optischen Wege, an denen der Kontrast gemessen wird. Von Abstand der Abbildungsebene der Oberfläche des Materials von den Enden, an denen der Kontrast gemessen wird, hängt die Größe des jeweiligen Kontrastwerts ab. Gleiche Kontrastwerte treten auf, wenn die Abbildungsebene den gleichen Abstand von den Enden der optischen Wege hat. Durch Veränderungen der Tastkopfposition gegenüber der Oberfläche so lange, bis die gemessenen Kontrastwerte gleich sind, wird eine genaue Fokussierung erreicht.

Der EP 0 939 294 A1 ist eine Vorrichtung zur Messung von Topografien zu entnehmen, wobei ein Bezugspunkt in unterschiedlichen optischen Abständen beobachtet wird, um die von den Sensoren ermittelten unterschiedlichen Bildschärfen zur Messung auszuwerten.

Der vorliegenden Erfindung liegt das Problem zugrunde, ein Verfahren und eine Vorrichtung der eingangs genannten Art so weiterzubilden, dass überaus schnell und präzise der Abstand zwischen dem Objekt und dem Bezugspunkt wie Optik bzw. Sensor bestimmt werden kann, wobei gegebenenfalls gleichzeitig mehrere Punkte in der Ebene des Objektes gemessen werden sollen. Gleichzeitig soll eine apparative Vereinfachung und damit geringere Störanfälligkeit erzielt werden.

Verfahrensmäßig wind das Problem im Wesentlichen dadurch gelöst, dass im Abbildungsstrahlengang der Optik an Enden von zumindest drei unterschiedlich langen optischen Wegen Kontrastverteilungen der Strahlungen in Abhängigkeit von dem Abstand zu dem zu messenden Punkt des Objektes mittels zumindest eines Sensors bestimmt und die ermittelten Kontrastverteilungen zueinander in Beziehung gesetzt werden und dass zur Bestimmung des Abstands zwischen dem zu messenden Punkt und dem Bezugspunkt in einem vorgegebenen Abstand Kontrastwerte des über die zumindest drei unterschiedlich langen optischen Wege abgebildeten Punktes gemessen und auf zuvor bestimmte Kontrastverteilung am Ende eines der optischen Wege transformiert werden.

Insbesondere ist dabei vorgesehen, dass jeweils ein Sensor jedem der unterschiedlich langen optischen Wege zugeordnet wird. Alternativ besteht die Möglichkeit, dass der von dem Punkt ausgehende Strahl in die unterschiedlich langen optischen Wege durch einem Sensor vorgeschaltete optische Elemente aufgeteilt wird. Bei den optischen Elementen kann es sich um matrixförmig angeordnete Planplatten unterschiedlicher Dicken handeln, durch die der Strahl in Teilstrahlen unterschiedlicher Weglängen aufgeteilt wird.

Ferner besteht die Möglichkeit, den Sensor in mehrere Messbereiche zur gleichzeitigen Abstandsmessung in verschiedene Bereiche des Objektes zu unterteilen.

Insbesondere ist vorgesehen, dass die jeweilige Kontrastverteilung jeweils einer Parabel angepasst wird, wobei dessen Scheitelpunkt dem Kontrastwert entspricht, bei dem ein Punkt scharf auf der Arbeitsebene des Sensors abgebildet ist. Durch Bestimmung der Parabel und dessen Scheitelpunkt kann sodann die Optik zu dem Punkt eingestellt werden, damit der Punkt real scharf in der Arbeitsebene abgebildet wird. Die Kontrastverteilungen können zudem normiert werden.

In Weiterbildung der Erfindung ist vorgesehen, dass die den unterschiedlich langen optischen Wegen zugeordneten Kontrastverteilungen derart überlappend verlaufen, dass im Messbereich bei einem zu messenden Abstand Kontrastwerte von einer Mindestanzahl von Kontrastverteilungen bestimmt werden, die ausreicht, um die Kontrastverteilung für den Sensor bzw. den optischen Weg zur scharfen Abbildung des zu messenden Punkt über den ausgewählten optischen Weg auf den Sensor zu berechnen. Besteht die Möglichkeit, die unterschiedlich langen optischen Wege auf einen Sensor abzubilden, so können auch drei oder mehrere zum Messen von Kontrastwerten geeignete Sensoren so angeordnet werden, dass deren Arbeitsebenen in unterschiedlichen Positionen zur Messachse verlaufen.

Als Sensoren können Bildsensoren oder CCD- oder Mehrchipkameras verwendet werden.

Der bzw. die zur Messung der Kontrastwerte benutzten Sensoren können insbesondere in ein Koordinatenmessgerät integriert werden, um den Abstand in Z-Richtung zu messen. Auch besteht die Möglichkeit, den Sensor mit einem Lageregelkreis einer CNC-Steuerung zu koppeln, um ein Scannen einer zu messenden Oberfläche zu realisieren.

Erfindungsgemäß benutzt man die Kenntnis, dass die in unterschiedlichen Abständen zwischen Messpunkt und Arbeitsebene eines Sensor gemessenen Kontrastwerte auf in etwa einer Parabel liegen, wobei der Kontrastwert im Scheitelpunkt dem optischen Abstand zwischen Arbeitsebene des Sensors und dem Punkt bei dessen scharfer Abbildung entspricht. Benutzt man mehrere Sensoren, die einen unterschiedlichen Abstand zu dem abzubildenden Punkt aufweisen und ermittelt die Kontrastwertkurven und normiert diese aufgrund der geometrischen Relation der Sensoren bzw. optischen Wege zueinander, so kann durch die Ermittlung der in einem jeden Sensor gemessenen Kontrastwerte in einem vorgegebenen Abstand aufgrund der zuvor bekannten Relation der Kontrastwertkurven bzw. -parabeln zueinander die Kontrastwertkurve des Sensors berechnet werden, auf dessen Arbeitsebene der Punkt scharf abgebildet werden soll. Der zu messende Punkt liegt sodann in der Fokusebene der dem Sensor zugeordneten Optik. Nach Berechnung der entsprechenden Kontrastwenkurve bedarf es allein der Bestimmung des Scheitelpunktes, um sodann den einzustelienden Abstand zwischen Sensor und Messpunkt zu erhalten und gegebenenfalls einzustellen.

Ist es aus Gründen der Messgenauigkeit bzw. bei der gleichzeitigen Bestimmung von Geometrien in einer die Abstandsachse Z nicht enthaltende Ebene (XY-Ebene) erforderlich, dass auf der Arbeitsebene des ausgewählten Sensors als Bezugspunkt der Messpunkt scharf abgebildet wird, so ist es bei alleiniger Bestimmung des Abstandes grundsätzlich nicht erforderlich, dass die den Sensor bzw. die Sensoren umfassende Optik zu dem Objekt abstandsverändert wird, sofern die ermittelten Kontrastwerte in Messbereichen liegen, die eine Berechnung einer Kontrastwertkurve und damit des Abstandes des dieser zugeordneten Sensors zum Objekt ermöglicht. Es erfolgt demnach allein ein Verstellen in der XY-Ebene.

Auch wenn vorteithafterweise jedem optischen Strahlengang ein gesonderter Sensor zugeordnet ist, so kann auch ein einziger. Sensor sämtlichen Strahlengängen zugeordnet werden, wobei die unterschiedlich langen optischen Wege durch Vorschalten von geeigneten optischen Elementen wie matrixförmig angeordnete unterschiedlich dicke Planplatten realisiert werden.

Optik und Sensor bzw. Sensoren selbst werden grundsätzlich als Einheit verstellt. Sofern die Optik als Zoomoptik ausgebildet ist, sind entsprechend der in Abhängigkeit von den Stellungen der in der Optik integrierten Linsen notwendige Umrechnungsfaktoren zu berücksichtigen.

Die Möglichkeit, einen optischen Strahlengang derart zu verlängern, dass sich drei unterschiedlich lange optische Wege ergeben, kann auch dadurch realisiert werden, dass der optische Strahl vor Eintreten in die Optik eine piezoelektrische Planplatte durchsetzt, die folglich in ihrer Dicke veränderbar ist und somit zeitlich nacheinander die Lichtstrahlenbereiche unterschiedlicher Dicken durchläuft. Auch besteht die Möglichkeit, den Lichtstrahl eine rotierende Scheibe durchsetzen zu lassen, die mehrere Planscheiben unterschiedlicher Dicken aufweist. Mittels einer Fotodiode kann der Sensor extern getriggert werden.

Ferner kann der Lichtstrahl auf einen Kippspiegel gelenkt werden, so dass der Strahlengang auf zumindest drei Sensoren wie Kameras geleitet wird, wobei der Abstand so zu wählen ist, dass die gewünschten unterschiedlich langen optischen Wege vorgegeben sind.

Als weitere Alternative zur Realisierung der erfindungsgemäßen Lehre kann der Strahlengang ein Linsenpaket einer Zoom-Optik durchsetzen, um zu dem gleichen Ergebnis zu gelangen.

Auch besteht die Möglichkeit, zur Erzeugung unterschiedlich langer optischer Wege den von dem Punkt ausgehenden Strahl eine CCD-Schicht mit voneinander abweichenden Pixelbereichen durchsetzen zu lassen.

Bei einem besonders hervorzuhebenden Vorschlag ist vorgesehen, dass die Kamera selbst auf einem Piezoelement abgestützt ist, wodurch der Abstand der Kamera zur Erzielung der drei unterschiedlich langen optischen Wege in Bezug auf den zu messenden Punkt verändert werden kann.

Vorrichtungsmäßig wird das der Erfindung zu Grunde liegende Problem im Wesentlichen dadurch gelöst, dass im Abbildungsstrahlengang der Optik an Enden von zumindest drei unterschiedlich langen optischen Wegen zur Bestimmung von Kontrastverteilungen der Strahlungen in Abhängigkeit von dem Abstand zu dem zu messenden Punkt des Objektes zumindest ein Sensor angeordnet ist, wobei zur Bestimmung des Abstandes zwischen dem zu messenden Punkt und dem Bezugspunkt in einem vorgegebenen Abstand Kontrastweite des über die zumindest drei unterschiedlich langen optischen Wege des abgebildeten Punktes gemessen und auf zuvor bestimmte Kontrastverteilung am Ende eines der optischen Wege transformiert werden. Dabei ist vorzusweise jeweils ein Sensor jedem der unterschiedlich langen optischen Wege zugeordnet. Auch können dem einen Sensor optische Elemente zur Aufteilung der von dem Punkt ausgehenden Strahlung in die unterschiedlich langen optischen Wege vorgeordnet sein. Dabei kann das optische Element matrixförmig angeordnete Planplatten unterschiedlicher Dicken sein.

Eine Weiterbildung sieht vor, dass der Sensor bzw. dessen Arbeitsfeld in mehrere Messbereiche zur gleichzeitigen Abstandsmessung verschiedener Bereiche des Objektes unterteilt ist. Der Sensor kann ein Bildsensor oder eine Mehrchipkamera sein.

Ferner ist vorgesehen, dass der Sensor mit einem Lageregelkreis einer CNC-Steuerung zum punktweise scannenden Messen einer Oberfläche des Objekts gekoppelt ist.

Zur Erzielung des von dem Punkt ausgehenden Strahls in unterschiedlich lange optische Wege kann dem Sensor eine von dem Strahl durchestzte piezoelektrische Platte vorgeordnet sein. Auch besteht die Möglichkeit, dass dem Sensor eine von dem Strahl durchsetzte sich drehende Scheibe vorgeordnet ist, auf der Planscheiben unterschiedlicher Dicken angeordnet sind.

Die Vorrichtung kann einen Kippspiegel aufweisen, von dem der von dem Punkt ausgehende Strahl auf zumindest drei Sensoren leitbar ist. Ferner kann der Sensor ein Linsenpaket einer Zoom-Optik aufweisen, das von dem Strahl durchsetzbar ist.

Zur Abstandsveränderung des optischen Sensors zu dem Punkt kann dieser femer auf einer ein Piezoelement umfassenden Halterung angeordnet sein.

Schließlich sieht eine Weiterbildung vor, dass der von dem Punkt ausgehende Strahl eine CCD-Schicht mit voneinander abweichenden Pixelbereichen durchsetzt.

Beschreibung eines der Zeichnung zu entnehmenden bevorzugten Ausführungsbeispiels:

Es zeigen:
- Fig. 1: eine Prinzipdarstellung einer Sensoranordnung zur Bestimmung eines Abstandes eines Punktes und
- Fig. 2: prinzipielle Verläufe von Kontrastwertkurven ermittelt mit Sensoren der Fig. 1.

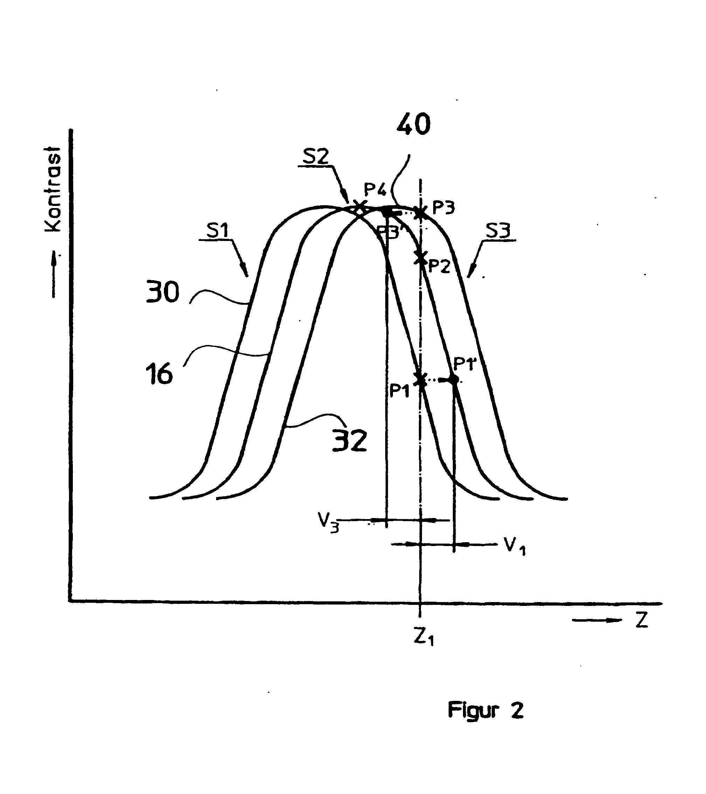

Um den Abstand eines Punktes 10 eines Objektes 12 bzw. dessen Oberfläche zu einem Bezugspunkt wie im Ausführungsbeispiel zu einem Sensor 14 zu ermitteln, der Bestandteil eines Tastkopfes eines nicht näher erläuterten und dargestellten Koordinatenmessgerätes sein kann, nutzt man erfindungsgemäß die Kenntnis, dass die abstandsabhängigen Kontrastwerte, also der gesamte Kontrastwerteverlauf in etwa auf einer Parabel liegt. Verändert man folglich den Abstand des Sensors 14 zu dem zu messenden Punkt 10. so ergibt sich in Abhängigkeit der Abbildungsebene zur Arbeitsebene in dem Sensor 14 ein Kontrastwerteverlauf, der einer Parabel entspricht und in Fig. 2 mit dem Bezugszeichen 16 versehen ist. Hierzu wird in bekannter Weise der Strahlengang über ein Objektiv 18 auf die Arbeitsebene des Sensors 14 gelenkt. Erfindungsgemäß sind dem Sensor 14 zwei weitere Sensoren 20, 22 zugeordnet, die zu dem zu messenden Punkt 10 einen unterschiedlichen optischen Abstand aufweisen. Dies wird dadurch erreicht, dass der zu dem Sensor 14 führende Strahl 20 über Strahlungsteiler 22, 24 und Umlenkelemente wie Prismen 26. 28 aufgeteilt wird, um so zu den Sensoren 20, 22 zu gelangen, die ihrerseits in Bezug auf ihre Arbeitsebenen ebenfalls in unterschiedlichem Abstand zu dem Messpunkt 10 verlaufen können. Das Objektiv 18 mit den Umlenkeinrichtungen 22, 24, 26, 28 sowie den Sensoren 14, 20, 22 bildet eine Einheit und kann erwähntermaßen ein Tastkopf eines Koordinatenmessgerätes sein.

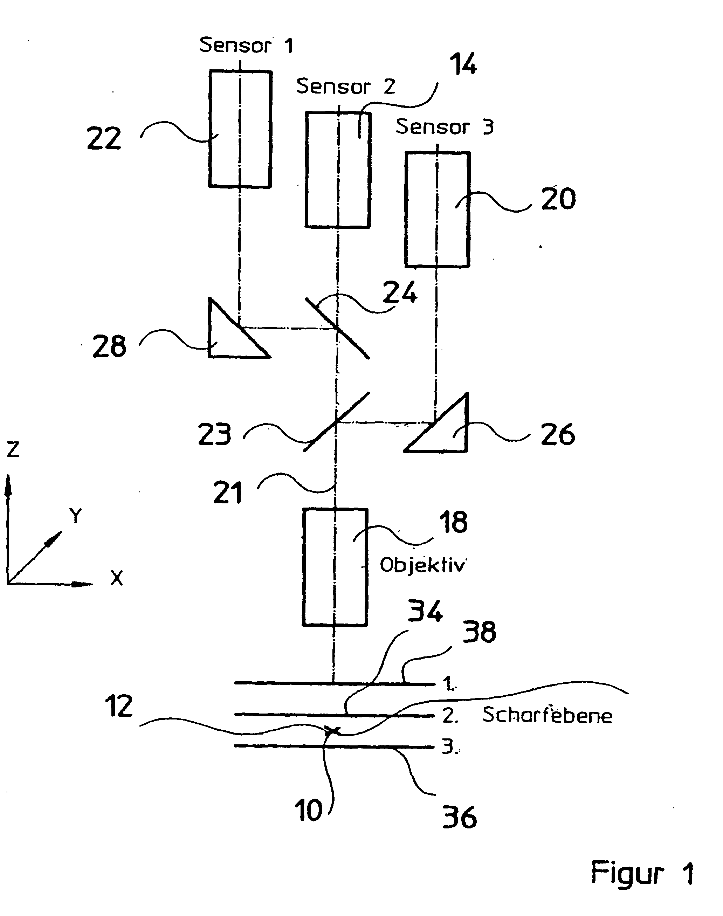

Um im Ausführungsbeispiel den Abstand zwischen dem Sensor 14, d.h. dessen Arbeitsebene zu einem zu messenden Punkt, im Ausführungsbeispiel dem Punkt 10 aus den Kontrastwerten zu bestimmen, die über die Sensoren 14, 20, 22 in einem vorgegebenen Abstand ermittelt werden, ohne dass der Punkt 10 in einer der Arbeitsebene der Sensoren 14, 20, 22 scharf abgebildet sein muss, wird zunächst der jeweils zu messende Kontrastwertverlauf in den Sensoren 14, 20, 22 bestimmt, so dass sich Messkurven ergeben, die der Fig. 2 zu entnehmen sind, also die Parabel 16 des Sensors 14 sowie aufgrund der im Vergleich zu dem Sensor 14 in unterschiedlichen optischen Abständen angeordneten Sensoren 20, 22 versetzt verlaufenden Parabeln 30, 32, wobei die Parabel 30 dem Sensor 22 und die Parabel 32 dem Sensor 20 zugeordnet ist. Dieser abstandsmäßige Versatz der Parabeln 16, 30, 32 ergibt sich aus dem Umstand, dass die Sensoren 14, 20, 22 unterschiedliche Scharfebenen aufweisen, die in Fig. 1 mit dem Bezugszeichen 34, 36 und 38 versehen sind.

Ist folglich der Tastkopf, der die Sensoren 14, 20, 22 sowie die Optik umfasst, zu dem Punkt 10 derart verstellt, dass sich dieser in der Scharfebene 36 des Sensors 20 befindet, so ergibt sich ein Kontrastwert 40, der dem Scheitelpunkt der Parabel 32 entspricht. Entsprechendes gilt in Bezug auf die Einstellung des Tastkopfes zu den Scharfebenen 34 und 38 der Sensoren 14 und 22.

Nachdem die Kontrastkurven 16, 30, 32 bestimmt und zueinander in Relation gesetzt sind, ist es nur noch erforderlich, in einem gewünschten Abstand des Tastkopfes zu einem zu messenden Punkt die jeweiligen Kontrastwerte der Sensoren 14, 20, 22 zu bestimmen, um aus diesen sodann unmittelbar den einem Abstand Z entsprechenden Scheitelpunkt des Sensors - im Ausführungsbeispiel des Sensors 14 - zu berechnen, bei dem der zu messende Punkt scharf auf die Arbeitsebene des Sensors 14 abgebildet wird. Dies wird anhand der Fig. 2 verdeutlicht. Werden im Abstand Z1 die Kontrastwerte des in den Sensoren 14, 20, 22 abgebildeten Messpunktes 10 bestimmt, so ergeben sich Messwerte P1, P2 und P3, wobei P3 der Messwert des Sensors 14 ist. Der Messwert P1 entspricht dem Kontrastwert, der von dem Sensor 22, und der Messwert P3 dem Kontrastwert, der von dem Sensor 20 ermittelt worden ist. Da die Relation der Kontrastwertkurven 16, 30, 32 zueinander bekannt ist, ist es nur noch erforderlich, den Messwerten P1 und P3 Messwerte auf der Kontrastwertkurve 16 des Sensors 14 zuzuordnen, so dass sich insgesamt drei Messwerte P1', P2 und P3' ergeben, die auf der abgelegten Messwertkurve des Sensors 14 liegen. Aus diesen Werten lässt sich sodann der gesamte Messwerteverlauf und somit deren Scheitelpunkt P4 ermitteln, dem ein Abstand Z zugeordnet ist, bei dem der Messpunkt 10 scharf auf der Arbeitsebene des Sensors 14 abgebildet ist. Somit lässt sich der Z-Abstand zwischen Messpunkt und Tastkopf ermitteln, ohne dass es eines Verstellens des Tastkopfes selbst zu dem Objekt 12 bedarf, um für jeden Sensor 14, 20, 22 mehrere Kontrastwerte zu messen.

## Patentansprüche

1. Verfahren zur Bestimmung des Abstandes eines Punktes eines Objektes zu einem vorgegebenen Bezugspunkt wie Sensor mittels durch Messung von Kontrastwerten des in der Arbeitsebene des Sensors abgebildeten Punktes, insbesondere zur scannenden Profilbestimmung einer Materialoberfläche mit einem Koordinatenmessgerät, wobei eine in einem relativ zur Objektoberfläche beweglichen Tastkopf angeordnete den Sensor umfassende Optik zu dem Objekt eingestellt und aus der Position der Optik gegenüber dem Objekt der Abstand bzw. dessen Profil bestimmt wird, wobei im Abbildungsstrahlengang der Optik an den Enden mehrerer unterschiedlich langer optischer Wege jeweils die Kontrastwerte des abgebildeten Punktes gemessen werden,
**dadurch gekennzeichnet,**
**dass** im Abbildungsstrahlengang der Optik an Enden von zumindest drei unterschiedlich langen optischen Wegen Kontrastverteilungen der Strahlungen in Abhängigkeit von dem Abstand zu dem zu messenden Punkt des Objektes mittels zumindest eines Sensors bestimmt und die ermittelten Kontrastverteilungen zueinander in Beziehung gesetzt werden und dass zur Bestimmung des Abstandes zwischen dem zu messenden Punkt und dem Bezugspunkt in einem vorgegebenen Abstand Kontrastwerte des über die zumindest drei unterschiedlich langen optischen Wege des abgebildeten Punktes gemessen und auf zuvor bestimmte Kontrastverteilung am Ende eines der optischen Wege transformiert werden.

2. Verfahren nach Anspruch 1,
**dadurch gekennzeichnet,**
**dass** jeweils ein Sensor jedem der unterschiedlich langen optischen Wege zugeordnet wird.

3. Verfahren nach Anspruch 1 oder 2,
**dadurch gekennzeichnet,**
**dass** der von dem Punkt ausgehende Strahl in die unterschiedlich langen optischen Wege durch einem Sensor vorgeschaltete optische Elemente aufgeteilt wird.

4. Verfahren nach einem der vorhergehenden Ansprüche,
**dadurch gekennzeichnet,**
**dass** als optisches Element matrixförmig angeordnete Planplatten unterschiedlicher Dicken verwendet werden.

5. Verfahren nach einem der vorhergehenden Ansprüche,
**dadurch gekennzeichnet,**
**dass** der Sensor bzw. dessen Arbeitsfeld in mehrere Messbereiche zur gleichzeitigen Abstandsmessung verschiedener Bereiche des Objektes unterteilt wird.

6. Verfahren nach einem der vorhergehenden Ansprüche,
**dadurch gekennzeichnet,**
**dass** die jeweilige Kontrastverteilung einer Parabel angepasst wird, deren Scheitelpunkt einem Kontrastwert entspricht, bei dem der zu messende Punkt scharf auf der Arbeitsebene des entsprechenden Sensors abgebildet wird.

7. Verfahren nach einem der vorhergehenden Ansprüche,
**dadurch gekennzeichnet,**
**dass** die den unterschiedlich langen optischen Wegen zugeordneten Kontrastverteilungen derart überlappend verlaufen, dass im Messbereich bei einem zu messenden Abstand Kontrastwerte von einer Mindestanzahl von Kontrastverteilungen bestimmt werden, die ausreicht, um die Kontrastverteilung für den Sensor bzw. den optischen Weg zur scharfen Abbildung des zu messenden Punktes über den ausgewählten optischen Weg auf den Sensor zu berechnen.

8. Verfahren nach einem der vorhergehenden Ansprüche,
**dadurch gekennzeichnet,**
**dass** als Sensor ein Bildsensor oder eine Mehrchipkamera verwendet wird.

9. Verfahren nach einem der vorhergehenden Ansprüche,
**dadurch gekennzeichnet,**
**dass** der Sensor mit einem Lageregelkreis einer CNC-Steuerung zum punktweise scannenden Messen einer Oberfläche des Objekts gekoppelt wird.

10. Verfahren nach einem der vorhergehenden Ansprüche,
**dadurch gekennzeichnet,**
**dass** zur Erzielung der unterschiedlich langen optischen Wege der von dem Punkt ausgehende Strahl eine einem Sensor vorgeordnete piezoelektrische Platte durchsetzt.

11. Verfahren nach einem der vorhergehenden Ansprüche,
**dadurch gekennzeichnet,**
**dass** der von dem Punkt ausgehende Strahl auf einer sich drehenden Scheibe angeordnete Planscheiben unterschiedlicher Dicken durchsetzt.

12. Verfahren nach einem der vorhergehenden Ansprüche,
**dadurch gekennzeichnet,**
**dass** der von dem Punkt ausgehende Strahl über einen Kippspiegel auf zumindest drei Sensoren geleitet wird.

13. Verfahren nach einem der vorhergehenden Ansprüche,
**dadurch gekennzeichnet,**
**dass** der von dem Punkt ausgehende Strahl ein Linsenpaket einer Zoom-Optik des optischen Sensors durchsetzt.

14. Verfahren nach einem der vorhergehenden Ansprüche,
**dadurch gekennzeichnet,**
**dass** der optische Sensor zur Abstandsveränderung zu dem Punkt auf einer ein Piezoelement umfassenden Halterung angeordnet wird.

15. Verfahren nach einem der vorhergehenden Ansprüche,
**dadurch gekennzeichnet,**
**dass** der von dem Punkt ausgehende Strahl eine CCD-Schicht mit voneinander abweichenden Pixelbereichen durchsetzt.

16. Vorrichtung zur Bestimmung des Abstandes eines Punktes (10) eines Objektes (12) zu einem vorgegebenen Bezugspunkt wie Sensor (14, 20, 22) mittels durch Messung von Kontrastwerten des in der Arbeitsebene des Sensors abgebildeten Punktes, insbesondere zur scannenden Profilbestimmung einer Materialoberfläche mit einem Koordinatenmessgerät, wobei eine in einem relativ zur Objektoberfläche beweglichen Tastkopf angeordnete den Sensor umfassende Optik zu dem Objekt eingestellt und aus der Position der Optik gegenüber dem Objekt der Abstand bzw. dessen Profil bestimmbar ist, wobei im Abbildungsstrahlengang der Optik an den Enden mehrerer unterschiedlich langer optischer Wege jeweils die Kontrastwerte des abgebildeten Punktes messbar sind,
**dadurch gekennzeichnet,**
**dass** im Abbildungsstrahlengang der Optik an Enden von zumindest drei unterschiedlich langen optischen Wegen zur Bestimmung von Kontrastverteilungen der Strahlungen in Abhängigkeit von dem Abstand zu dem zu messenden Punkt (10) des Objektes (12) zumindest ein Sensor (14, 20, 22) angeordnet ist, wobei zur Bestimmung des Abstandes zwischen dem zu messenden Punkt und dem Bezugspunkt in einem vorgegebenen Abstand Kontrastwerte des über die zumindest drei unterschiedlich langen optischen Wege des abgebildeten Punktes messbar sind und auf die zu vor bestimmte kontrastverteilung am Ende eines der optischen Wege transformierbar sind.

17. Vorrichtung nach Anspruch 16,
**dadurch gekennzeichnet,**
**dass** jeweils ein Sensor (14, 20, 22) jedem der unterschiedlich langen optischen Wege zugeordnet ist.

18. Vorrichtung nach Anspruch 16 oder 17,
**dadurch gekennzeichnet,**
**dass** dem einen Sensor (14, 20, 22) optische Elemente zur Aufteilung der von dem Punkt (10) ausgehenden Strahlung in die unterschiedlich langen optischen Wege vorgeordnet sind.

19. Vorrichtung nach einem der Ansprüche 16-18,
**dadurch gekennzeichnet,**
**dass** das optische Element matrixförmig angeordnete Planplatten unterschiedlicher Dicken sind.

20. Vorrichtung nach einem der Ansprüche 16-19,
**dadurch gekennzeichnet,**
**dass** der Sensor (14, 20, 22) bzw. dessen Arbeitsfeld in mehrere Messbereiche zur gleichzeitigen Abstandsmessung verschiedener Bereiche des Objektes (12) unterteilt ist.

21. Vorrichtung nach einem der Ansprüche 16-20,
**dadurch gekennzeichnet,**
**dass** der Sensor (14, 20, 22) ein Bildsensor oder eine Mehrchipkamera ist.

22. Vorrichtung nach einem der Ansprüche 16-21,
**dadurch gekennzeichnet,**
**dass** der Sensor (14, 20, 22) mit einem Lageregelkreis einer CNC-Steuerung zum punktweise scannenden Messen einer Oberfläche des Objekts (12) gekoppelt ist.

23. Verfahren nach einem der Ansprüche 16-22,
**dadurch gekennzeichnet,**
**dass** zur Erzielung des von dem Punkt ausgehenden Strahls in unterschiedlich lange optische Wege dem Sensor (14, 20, 22) eine von dem Strahl durchsetzte piezoelektrische Platte vorgeordnet ist.

24. Vorrichtung nach einem der Ansprüche 16-23,
**dadurch gekennzeichnet,**
**dass** dem Sensor (14, 20, 22) eine von dem Strahl durchsetzte sich drehende Scheibe vorgeordnet ist, auf der Planscheiben unterschiedlicher Dicken angeordnet sind.

25. Vorrichtung nach einem der vorhergehenden Ansprüche 16-24,
**dadurch gekennzeichnet,**
**dass** die Vorrichtung einen Kippspiegel aufweist, von dem der von dem Punkt (10) ausgehende Strahl auf zumindest drei Sensoren (14, 20, 22) leitbar ist.

26. Vorrichtung nach einem der Ansprüche 16-25,
**dadurch gekennzeichnet,**
**dass** der Sensor (14, 20, 22) ein Linsenpaket einer Zoom-Optik aufweist, das von dem Strahl durchsetzbar ist.

27. Vorrichtung nach einem der Ansprüche 16-26,
**dadurch gekennzeichnet,**
**dass** der optische Sensor (14, 20, 22) zur Abstandsveränderung zu dem Punkt (10) auf einer ein Piezoelement umfassenden Halterung angeordnet ist.

28. Vorrichtung nach einem der Ansprüche 16-27,
**dadurch gekennzeichnet,**
**dass** der von dem Punkt (10) ausgehende Strahl eine CCD-Schicht mit voneinander abweichenden Pixelbereichen durchsetzt.

## Claims

1. Method for determining the distance of a point of an object to a specified reference point, such as a sensor, by measuring contrast values of the point that is represented in the working plane of the sensor, in particular for a scanning profile determination of a material surface with a coordinate measuring instrument, wherein an optical system, which comprises the sensor and is arranged in a probe that is displaceable relative to the object surface, is adjusted in relation to the object and wherein from the position of the optical system in relation to the object the distance and/or its profile is determined, wherein in the imaging beam path of the optical system the contrast values of the depicted point are measured at the end of several optical paths of different lengths,
**characterized in**
**that** in the imaging beam path of the optical system at the end of at least three optical paths of different lengths contrast distributions of the beams are determined according to the distance to the point of the object that is to be measured through at least one sensor and that a relationship is established between the resulting contrast distributions as well as that for determining the distance between the point to be measured and the reference point contrast values of the point, which is depicted via the at least three optical paths with different lengths, are measured at a specified distance and transformed to previously determined contrast distribution at the end of the optical paths.

2. Method according to claim 1,
**characterized in**
**that** one sensor each is assigned to each of the optical paths of different lengths.

3. Method according to claim 1 or 2,
**characterized in**
**that** the beam proceeding from the point is split into the optical paths of different lengths through optical elements that are distributed in front of a sensor.

4. Method according to one of the previous claims,
**characterized in**
**that** flat face-plates of different thickness, which are arranged in a matrix shape, are used as the optical element.

5. Method according to one of the previous claims,
**characterized in**
**that** the sensor or its working field is divided into several measuring areas for simultaneous distance measuring of various areas of the object.

6. Method according to one of the previous claims,
**characterized in**
**that** the respective contrast distribution is adapted to a parabola, whose vertex corresponds to a contrast value, at which the point to be measured is sharply depicted on the working plane of the corresponding sensor.

7. Method according to one of the previous claims,
**characterized in**
**that** the contrast distributions, which are allocated to the optical paths with different lengths, run in an overlapping manner in such a way that in the measuring area contrast values are determined from a minimum number of contrast distributions for a distance that is to be measured, with this number being sufficient for calculating the contrast distribution for the sensor or optical path for a sharp depiction of the point to be measured via the selected optical path to the sensor.

8. Method according to one of the previous claims,
**characterized in**
**that** an image sensor or multiple-chip camera is used as sensor.

9. Method according to one of the previous claims,
**characterized in**
**that** the sensor is coupled with a position control loop of a CNC control system for the point-by-point scanning measurement of a surface of the object.

10. Method according to one of the previous claims,
**characterized in**
**that** for the purpose of achieving optical paths with different lengths, the beam proceeding from the point penetrates a piezo-electric plate, which is arranged in front of a sensor.

11. Method according to one of the previous claims,
**characterized in**
**that** the beam proceeding form the point penetrates flat face-plates of different thicknesses that are arranged on a rotating disk.

12. Method according to one of the previous claims,
**characterized in**
**that** the beam proceeding from the point is directed via a tilting mirror onto at lest three sensors.

13. Method according to one of the previous claims,
**characterized in**
**that** the beam proceeding from the point penetrates a lens package of a zoom lens of the optical sensor.

14. Method according to one of the previous claims,
**characterized in**
**that** the optical sensor is arranged on a fastening device that comprises a piezo-element to be able to change the distance to the point.

15. Method according to one of the previous claims,
**characterized in**
**that** the beam proceeding from the point penetrates a CCD layer with pixel areas deviating from one another.

16. Device for determining the distance of a point (10) of an object (12) to a specified reference point such as a sensor (14, 20, 22) by measuring contrast values of the point depicted in the working plane of the sensor, in particular for a scanning profile determination of a material surface with a coordinate measuring instrument, wherein an optical system, which comprises the sensor and is arranged in a probe that is displaceable relative to the object surface, is adjusted in relation to the object, and wherein from the position of the optical system in relation to the object the distance and its profile, respectively, can be determined, wherein in the imaging beam path of the optical system the contrast values of the depicted point are measured at the ends of several optical paths of different lengths,
**characterized in**
**that** in the imaging beam path of the optical system at the end of at least three optical paths of different lengths, at least one sensor (14, 20, 22) is arranged for the purpose of determining the contrast distributions of the beams in dependence upon the distance to the point (10) of the object (12), whereby for determining the distance between the point to be measured and the reference point contrast values of the point, which is depicted via the at least three optical paths with different lengths, can be measured at a specified distance and can be transformed to the previously determined contrast distribution at the end of the optical paths.

17. Device according to claim 16,
**characterized in**
**that** in each case one sensor (14, 20, 22) is assigned to each of the optical paths with different lengths.

18. Device according to claim 16 or 17,
**characterized in**
in front of the one sensor (14, 20, 22), optical elements are arranged for splitting the beam proceeding form the point (10) into the optical paths of different lengths.

19. Device according to one of the claims 16-18,
**characterized in**
**that** flat face-plates of different thicknesses, arranged matrix-like, are used as the optical element.

20. Device according to one of the claims 16-19,
**characterized in**
**that** the sensor (14, 20, 22) or its working field is divided into several measuring areas for simultaneous distance measuring of various areas of the object (12).

21. Device according to one of the claims 16-20,
**characterized in**
**that** the sensor (14, 20, 22) is an image sensor or a multiple-chip camera.

22. Device according to one of the claims 16-21,
**characterized in**
**that** the sensor (14, 20, 22) is coupled with a position control loop of a CNC control system for the point-by point scanning measurement of a surface of the object (12).

23. Device according to one of the claims 16-22,
**characterized in**
**that** for the purpose of achieving the optical paths with different lengths, the beam proceeding from the point penetrates a piezo-electric plate arranged in front of the sensor (14, 20, 22).

24. Device according to one of the claims 16-23,
**characterized in**
**that** in front of the sensor (14, 20, 22) a rotating disk, which is penetrated by the beam, is arranged, on which flat face-plates of different thicknesses are located.

25. Device according to one of the claims 16-24,
**characterized in**
**that** the device contains a tilting mirror, from which the beam proceeding from the point (10) can be directed to at lest three sensors (14, 20, 22).

26. Device according to one of the claims 16-25,
**characterized in**
**that** the sensor (14, 20, 22) is equipped with a lens package of a zoom lens, which can be penetrated by the beam.

27. Device according to one of the claims 16-26,
**characterized in**
**that** the optical sensor (14, 20, 22) is arranged on a fastening device that comprises a piezo-element to be able to change the distance to the point (10).

28. Device according to one of the claims 16-27,
**characterized in**
**that** the beam proceeding from the point (10) penetrates a CCD layer with pixel areas deviating from one another.

## Revendications

1. Procédé destiné à déterminer la distance d'un point d'un objet par rapport à un point de référence prédéfini, tel qu'un capteur, au moyen de la mesure de valeurs de contraste du point représenté dans le plan de travail du capteur, en particulier pour déterminer par scanographie le profil d'une surface matérielle avec un mesureur à coordonnées, sachant qu'un instrument optique comprenant le capteur et placé dans un palpeur mobile par rapport à la surface de l'objet est ajusté sur l'objet, et qu'à partir de la position de l'instrument optique par rapport à l'objet est mesuré(e) la distance ou son profil, les valeurs de contraste du point représenté étant respectivement mesurées dans le faisceau de reproduction de l'instrument optique aux extrémités de plusieurs parcours optiques de différentes longueurs,
**caractérisé en ce**
**que**, dans le faisceau de reproduction de l'instrument optique aux extrémités d'au moins trois parcours optiques de longueurs différentes, des distributions de contraste des faisceaux sont déterminées en fonction de la distance du point de l'objet à mesurer au moyen d'au moins un capteur, et que les distributions de contraste déterminées sont mises en relation les unes avec les autres, et que pour déterminer la distance entre le point à mesurer et le point de référence, sont mesurées à une distance prédéfinie des valeurs de contraste du point représenté par au moins les trois parcours optiques de longueurs différentes et sont transformées sur une distribution de contraste déterminée au préalable à l'extrémité d'un des parcours optiques.

2. Procédé selon la revendication 1,
**caractérisé en ce**
**qu'**un capteur est affecté à chacun des parcours optiques de longueurs différentes.

3. Procédé selon la revendication 1 ou 2,
**caractérisé en ce**
**que** le faisceau issu du point est réparti dans les parcours optiques de longueurs différentes par des éléments optiques placés en amont d'un capteur.

4. Procédé selon l'une des revendications précédentes,
**caractérisé en ce**
**que** des lames planes de différentes épaisseurs disposées en matrice sont utilisées comme élément optique.

5. Procédé selon l'une des revendications précédentes,
**caractérisé en ce**
le capteur ou son champ d'action est subdivisé en plusieurs plages de mesure pour une mesure de distance simultanée de différentes zones de l'objet.

6. Procédé selon l'une des revendications précédentes,
**caractérisé en ce**
**qu'**à chaque distribution de contraste est conjuguée une parabole dont le sommet correspond à une valeur de contraste pour laquelle le point à mesurer est représenté net sur le plan de travail du capteur correspondant.

7. Procédé selon l'une des revendications précédentes,
**caractérisé en ce**
**que** les distributions de contraste affectées aux parcours optiques de longueurs différentes se chevauchent de telle manière que dans la plage de mesure d'une distance à mesurer, des valeurs de contraste sont déterminées par un nombre minimal de distributions de contraste suffisant pour calculer la distribution de contraste pour le capteur ou le parcours optique permettant une représentation nette du point à mesurer sur le capteur au travers du parcours optique sélectionné.

8. Procédé selon l'une des revendications précédentes,
**caractérisé en ce**
un capteur vidéo ou une caméra multipuces est utilisé(e) comme capteur.

9. Procédé selon l'une des revendications précédentes,
**caractérisé en ce**
**que** le capteur est couplé avec une régulation en boucle fermée de position d'une commande numérique par ordinateur destinée à la mesure ponctuelle par scanographie d'une surface de l'objet.

10. Procédé selon l'une des revendications précédentes,
**caractérisé en ce**
**que** pour obtenir les parcours optiques de longueurs différentes, le faisceau issu du point traverse une plaque piézo-électrique placée en amont d'un capteur.

11. Procédé selon l'une des revendications précédentes,
**caractérisé en ce**
**que** le faisceau issu du point traverse des lames planes de différentes épaisseurs placées sur un disque en rotation.

12. Procédé selon l'une des revendications précédentes,
**caractérisé en ce**
**que** le faisceau issu du point est dirigé vers au moins trois capteurs par un miroir basculant.

13. Procédé selon l'une des revendications précédentes,
**caractérisé en ce**
**que** le faisceau issu du point traverse un système de lentilles d'un objectif à focale variable du capteur optique.

14. Procédé selon l'une des revendications précédentes,
**caractérisé en ce**
**que** pour modifier la distance par rapport au point, le capteur optique est placé sur un support conjugué à un élément piézo-électrique.

15. Procédé selon l'une des revendications précédentes,
**caractérisé en ce**
**que** le faisceau issu du point traverse une couche CCD avec des zones de pixels distinctes les unes des autres.

16. Dispositif destiné à déterminer la distance d'un point (10) d'un objet (12) par rapport à un point de référence prédéfini, tel qu'un capteur (14, 20, 22), au moyen de la mesure de valeurs de contraste du point représenté dans le plan de travail du capteur, en particulier pour déterminer par scanographie le profil d'une surface matérielle avec un mesureur à coordonnées, sachant qu'un instrument optique comprenant le capteur et placé dans un palpeur mobile par rapport à la surface de l'objet est ajusté sur l'objet, et qu'à partir de la position de l'instrument optique par rapport à l'objet peut être calculé(e) la distance ou son profil, les valeurs de contraste du point représenté pouvant être respectivement mesurées dans le faisceau de reproduction de l'instrument optique aux extrémités de plusieurs parcours optiques de différentes longueurs
**caractérisé en ce**
**que**, dans le faisceau de reproduction de l'instrument optique à l'extrémité d'au moins trois parcours optiques de longueurs différentes est placé au moins un capteur (14, 20, 22) pour déterminer des distributions de contraste des faisceaux en fonction de la distance du point à mesurer (10) de l'objet (12), sachant que pour calculer la distance entre le point à mesurer et le point de référence, peuvent être mesurées à une distance prédéfinie des valeurs de contraste du point représenté par au moins les trois parcours optiques de longueurs différentes et peuvent être transformées sur la distribution de contraste déterminée au préalable à l'extrémité d'un des parcours optiques.

17. Dispositif selon la revendication 16,
**caractérisé en ce**
**qu'**un capteur (14, 20, 22) est affecté à chacun des parcours optiques de différentes longueurs.

18. Dispositif selon la revendication 16 ou 17,
**caractérisé en ce**
**qu'**en amont d'un capteur (14, 20, 22) sont placés des éléments optiques destinés à répartir le faisceau issu du point (10) sur les parcours optiques de différentes longueurs.

19. Dispositif selon l'une des revendications 16 à 18,
**caractérisé en ce**
**que** des lames planes de différentes épaisseurs disposées en matrice constituent l'élément optique.

20. Dispositif selon l'une des revendications 16 à 19,
**caractérisé en ce**
**que** le capteur (14, 20, 22) ou son champ d'action est subdivisé en plusieurs plages de mesure pour une mesure de distance simultanée de différentes zones de l'objet (12).

21. Dispositif selon l'une des revendications 16 à 20,
**caractérisé en ce**
**que** le capteur (14, 20, 22) est un capteur vidéo ou une caméra multipuces.

22. Dispositif selon l'une des revendications 16 à 21,
**caractérisé en ce**
**que** le capteur (14, 20, 22) est couplé avec une régulation en boucle fermée de position d'une commande numérique par ordinateur destinée à la mesure ponctuelle par scanographie d'une surface de l'objet (12).

23. Procédé selon l'une des revendications 16 à 22,
**caractérisé en ce**
**que** pour obtenir les parcours optiques de longueurs différentes, le faisceau issu du point traverse une plaque piézo-électrique placée en amont du capteur (14, 20, 22).

24. Procédé selon l'une des revendications 16 à 23,
**caractérisé en ce**
**qu'**en amont du capteur (14, 20, 22) est placé un disque en rotation traversé par le faisceau, sur lequel sont placées des lames planes de différentes épaisseurs.

25. Procédé selon l'une des revendications 16 à 24,
**caractérisé en ce**
**que** le dispositif présente un miroir basculant permettant de guider le faisceau issu du point (10) vers au moins trois capteurs (14, 20, 22).

26. Procédé selon l'une des revendications 16 à 25,
**caractérisé en ce**
**que** le capteur (14, 20, 22) présente un système de lentilles d'un objectif à focale variable qui peut être traversé par le faisceau.

27. Procédé selon l'une des revendications 16 à 26,
**caractérisé en ce**
**que** pour modifier la distance par rapport au point (10), le capteur optique (14, 20, 22) est placé sur un support comprenant un élément piézo-électrique.

28. Procédé selon l'une des revendications 16 à 27,
**caractérisé en ce**
**que** le faisceau issu du point (10) traverse une couche CCD avec des zones de pixels distinctes les unes des autres.
